# EUROPEAN PATENT APPLICATION

(11) **EP 1 201 386 A2**
(43) Date of publication of application: **02.05.2002**
(21) Application number: 01307152.7
(22) Date of filing: 22.08.2001
(51) Int. Cl.: B28D 1/12

(54) **Masonry cutting members having wear indicators**

(30) Priority: 24.10.2000 GB 0025980
(71) Applicant: Marcrist International Limited, Doncaster DN3 1QR (GB)
(72) Inventor: Halbeisen, Mario, CH-6052 Hergiswil (CH)
(74) Representative: Loven, Keith James

(57) **Abstract**

A cutting member 2 for a masonry cutting tool 1, comprises a cutting edge 2a which wears in use, at least one lateral side of the cutting member being provided with indicator means 14 formed therein to provide an indication of lateral wear of the cutting member. The lateral wear indicator 14 may be associated with further indicator means 4 to indicate the extent of wear in a direction radially inwards of a cutting disc or axially of a core cutting tool.

The different types of indicator 14, 4 may be provided on the same or different teeth of a cutting tool but are preferably cut in a single operation in a tooth by laser incision and/or cutting.

## Description

### Field of the Invention

This invention relates to cutting members such as discs, especially, but not exclusively, for use in cutting masonry, stone and the like.

### Background to the Invention

Masonry cutting members such as cutting discs are typically provided with diamond grit cutting materials on the rim thereof, either as a surface coating or, more usually, incorporated into a soft carrier material formed as segments welded or otherwise secured to the cutting edge of the member. In view of the materials used and the complexity of construction, the discs are relatively high-value articles.

It is common for cutting tools to be hired for use on specific jobs, and for the cutting members to be supplied with the tool, usage of the cutting members being charged on the basis of the amount of wear which occurs during the hire period, thereby allowing part-used members to be used, rather than replacing the members after every job. This requires measuring the cutting edge before and after use, but a difficulty arises in obtaining an accurate figure acceptable to the supplier and the user.

It has been proposed to use accurate calliper gauges or the like to obtain an indication of the wear which has occurred, but the use of precision gauges requires a high level of skill, and such skills are rarely found in hire shop staff. As a result, the use of gauges and the like tends to reduce accuracy, rather than increase it, and is usually quickly abandoned.

It had also been proposed to incorporate wear indicators into the cutting tools themselves. For example, GB2335161 to Scintilla AG discloses a cutting tool, specifically a cutting disc, in which various formations are provided to give a visual indication as to the extent to which the cutting edge has worn. These formations may consist of notches, apertures or sacrificial inserts, coupled with indicia to enable the extent of wear to be monitored. In each case, the formations and indicia are only capable of indicating the extent by which the cutting surface has worn down in a direction normal to the cutting surface.

However, difficulties still arise in that a cutting tool hired to a user may be returned to the supplier in a condition where the cutting surface has experienced little wear, as measured or indicated by any of the above methods, but the tool is unusable as a result of excessive wear on the lateral surface or surfaces of the cutting edge.

Another earlier disclosure, in the Gondar US Patent No 4886009, also discusses the use of wear indicators, but this too fails to approach the issue of lateral surface wear.

The present invention therefore seeks to provide a means of quickly and simply assessing wear in the lateral surfaces(s) of cutting members.

In this connection, it is known for cutting tools to be equipped with cutting elements whose thickness varies. As applied to cutting discs, the width of the element, measured in a direction perpendicular to the face of the disc, increases with increased radial distance from the axis of rotation. Examples of cutting tools incorporating such cutting elements are described in published PCT Patent Application No WO 95/22446 in the name of Diamant Boart SA. In this document, the elements themselves, termed "pagodas", have stepped lateral surfaces delineated by sharp edges or clearance grooves running at a shallow angle relative to the circumferential cutting surface of the disc. This particular construction is designed to improve the lateral stability of the tool and no mention is made of any application to monitoring wear.

### Summary of the Invention

According to the invention, there is provided a cutting member for a masonry cutting tool, comprising a cutting edge which wears in use, at least one lateral side of the cutting member being provided with indicator means formed therein to provide an indication of lateral wear of the cutting member.

There may be a plurality of indicator means so arranged as to indicate different depths of wear.

The indicator means preferably comprise markings incised into the said lateral side so as to ensure that they remain visible after wear of the tool. In one embodiment of the invention, the indicator means comprise grooves of different depths extending into the thickness of the member in a direction normal to its side surface, for example representing wear depths of 0.1 mm, 0.2mm, 0.3mm, 0.4mm and 0.5mm.

Although the indicator means can be spaced in a direction along the cutting edge, they can be provided adjacent to each other for convenience of use.

The cutting member may be a disc, for example having a plurality of segments of diamond-carrying support material around its periphery, but it could also be of other configurations, for example a tubular member for cutting cores in masonry, the cutting edge being formed around one end of the tube. The cutting edge of the tube may also be segmented.

The provision of indicators built into the cutting members permits the lateral wear to be readily assessed by relatively unskilled staff, and avoids argument as to the actual amount. For example, the wear may be charged in accordance with bands of use from 0-20%, 20-40%, 40-60%, 60-80%, 80-100% or 0.1mm, 0.2mm, 0.3mm, 0.4mm, 0.5mm, etc, although smaller bands may be provided for if required.

The lateral wear indicators may be provided in addition to wear indicators provided to indicate wear in a direction inwardly of the cutting edge or cutting surface. It has been found that the provision of small grooves or slots inwardly of the cutting edge does not have any noticeable effect on the durability or cutting ability of the member.

Where both sets of wear indicators are provided, it may be advantageous for them to be provided in the same location on the cutting member. Alternatively, they may be spaced apart along the cutting direction of the member. It may even be preferable for a cutting tool to be fitted with a mixture of cutting members, each provided with a respective one or other of the wear indicators.

### Brief Description of the Drawing

In the drawing, which illustrates exemplary embodiments of the invention:
Figure 1 is a view of a minor portion of a cutting disc in accordance with one embodiment of the invention;
Figure 2 is a side elevation of a hole boring tool in accordance with another embodiment of the invention;
Figure 3 is a perspective view of a portion of a cutting disc in accordance with the invention; and
Figure 4 is a perspective view of a portion of a cutting disc incorporating two types of wear indicator in accordance with the invention.

### Detailed Description of the Illustrated Embodiments

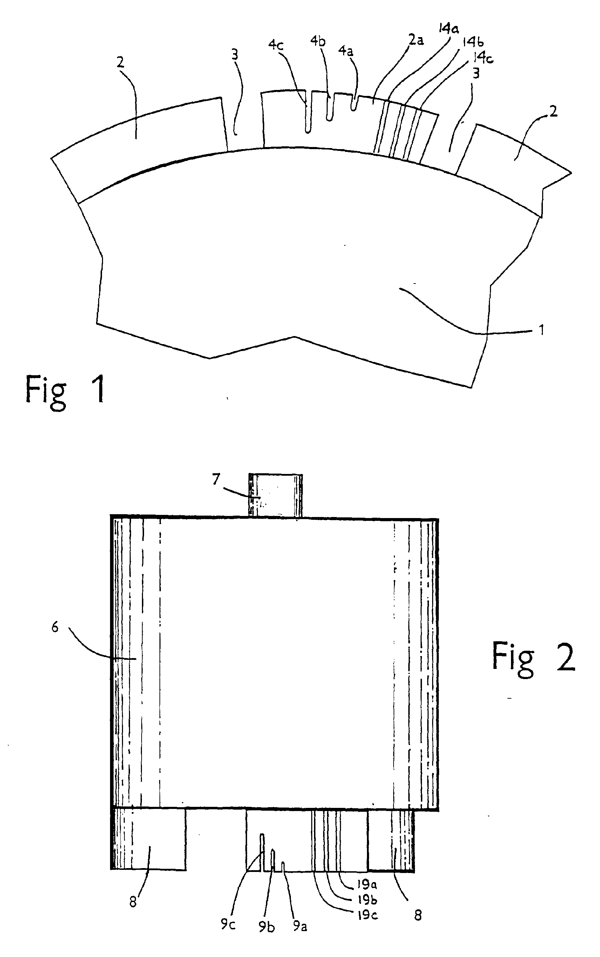

Referring first to Figure 1, the disc is of generally conventional design, and has a support disc 1 with a plurality of segments 2 of cutting material attached to the rim of the disc 1. Each segment 2 is formed of a relatively soft wearable material such as bronze or cobalt containing diamond particles suspended therein. The segments are attached by sintering in situ, by welding, or by combinations of these, in conventional manner. It will also be understood that the shape of the segments and of the spaces 3 dividing them may be of any form without affecting the scope of the invention.

In one of the segments 2a a series of three slots 4a, 4b and 4c is cut inwardly from the outer edge 5. The slots are of differing lengths, and may be, for example, 2, 4 and 6mm in length, respectively, to indicate progressive amounts of wear of the cutting segments in a radially inward direction.

Shown alongside but spaced from these slots is a lateral wear indicator in accordance with the present invention. It consists of at least one groove or incised line 14a, 14b, 14c extending into the lateral surface of the member 2 by differing amounts so as to indicate corresponding different extents of wear. Suitable wear depths would be 0.1mm, 0.2mm, 0.3mm, 0.4mm, 0.5mm, etc, although, depending on the available side clearance, other depths could be equally suitable.

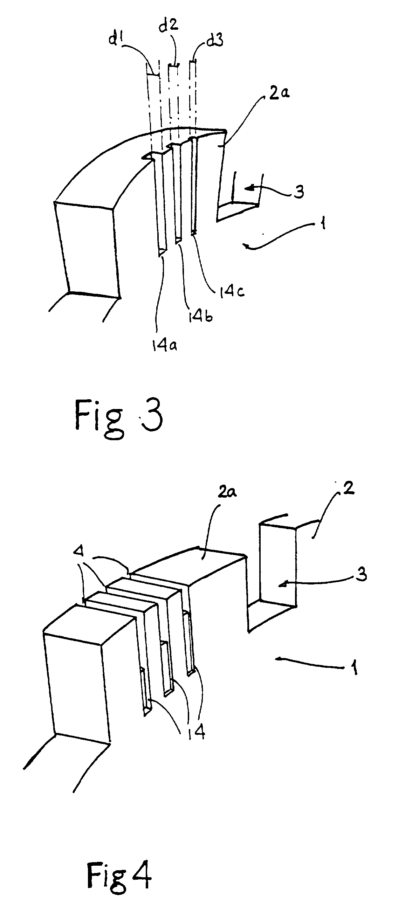

Figure 3 shows, in perspective, the manner in which the lateral wear indicator grooves 14a, 14b, 14c extend to different depths d1, d2, d3 into the lateral depth of the tooth 2a.

The slots 4a, 4b, 4c may be laser cut, or could be sintered into the segment at the point of manufacturing the segment, and are preferably relatively narrow so as not to affect adversely the strength of the teeth or their cutting performance. By the same token, the slots 14a, 14b, 14c may also be laser cut and relatively narrow. It may be convenient for the sets of slots 4 and grooves14 to be cut in one operation. Such a construction is illustrated in the perspective view in Figure 4. In this case, the laser cutter would be programmed first to cut the slots 4 then to reduce its cutting depth and incise the grooves. Alternatively, the grooves14 could be cut before the slots 4. The deeper grooves could be continued from the deeper slots. However, in the interests of conserving strength, the deeper grooves could be continued from the shallower slots. Alternatively, the slots and grooves could be spaced from each other or, as previously mentioned, provided on different cutting members.

Figure 2 shows another embodiment, in which a hole-boring tool comprises a tubular body 6 having at one end a threaded connector 7 for attachment to a power drill, and around the rim at the other end a number of (in this case three) cutting teeth 8, one of which is provided with a series of three slots 9a, 9b and 9c extending inwardly from the free end thereof to indicate wear in the axial direction. The slots are again of differing lengths, indicating predetermined chargeable steps in the axial wear of the teeth.

In addition, lateral wear indicators 19a, 19b, 19c in accordance with the invention are shown provided on the same tooth although they may be provided on a different tooth. They may be provided on one or both sides of one or more teeth. The lateral wear indicators may be of the same type and produced in the same way as those on the circular cutting disc of the previous embodiment.

It will be appreciated that different numbers and configurations of teeth may be provided, and that the indicator slots 9 and the indicator grooves 19 may be provided in the same or different teeth.

In addition, whilst the lateral wear indicator grooves have been shown in each embodiment as extending across the whole of the cutting member or cutting tooth, they need only extend part way, preferably at least as far as any wear indicator for indicating wear in a direction inwardly from the cutting edge or surface.

## Claims

1. A cutting member for a masonry cutting tool, comprising a cutting edge which wears in use, at least one lateral side of the cutting member being provided with indicator means formed therein to provide an indication of lateral wear of the cutting member.

2. A cutting member according to Claim 1, wherein the indicator means is so arranged as to indicate different depths of wear.

3. A cutting member according to Claim 1 or 2, wherein the indicator means comprise markings incised into said at least one lateral side.

4. A cutting member according to Claim 3, wherein the indicator means comprise grooves of different depths extending into the thickness of the member in a direction normal to its side surface, whereby to indicate different depths of lateral wear.

5. A cutting member according to Claim 4, wherein said grooves are of depth indicating 0-20%, 20-40%, 40-60%, 60-80%, 80-100% wear.

6. A cutting member according to Claim 5, wherein the indicator means are spaced in a direction along the cutting edge of said member.

7. A cutting member according to any of the preceding claims, wherein the cutting member is a disc.

8. A cutting member according to Claim 7, wherein the disc has a plurality of segments of diamond-carrying support material around its periphery.

9. A cutting member according to any of Claims 1 to 6, wherein the cutting member is a tubular member for cutting cores in masonry, the cutting edge being formed around one end of the tube.

10. A cutting member according to Claim 9, wherein the cutting edge of the tube is segmented.

11. A cutting member according to any of the preceding claims, wherein said lateral wear indicators are provided in addition to further wear indicators provided to indicate wear in a direction inwardly of the cutting edge or cutting surface.

12. A cutting member according to Claim 11, wherein said lateral and said further wear indicators are provided in the same location on the cutting member.

13. A cutting member according to Claim 11, wherein said lateral and said further wear indicators are spaced apart along the cutting direction of the member.

14. A cutting member according to any of Claims 11 to 13, wherein said lateral and said further indicators are formed by slots and/or grooves cut or incised into the cutting member, a said lateral wear indicator being a continuation of a said further wear indicator.

15. A cutting tool provided with a plurality of cutting members, at least one said cutting member being provided with lateral wear indicator means according to any of the preceding claims.

16. A cutting tool according to Claim 15, wherein at least one cutting member is provided with further wear indicators provided to indicate wear in a direction inwardly of the cutting edge or cutting surface, the lateral and said further wear indicators being provided on the same or a different cutting member.
